# FASCICULE DE BREVET EUROPEEN

(11) **EP 0 689 634 B1**
(45) Date de publication et mention de la délivrance du brevet: **13.01.1999**
(21) Numéro de dépôt: 93924678.1
(22) Date de dépôt: 05.11.1993
(51) Int. Cl.: E05F 1/12, E05D 11/10, G02C 5/22

(54) **SYSTEME D'ARTICULATION ENTRE DEUX ELEMENTS RIGIDES ET PROCEDE D'ARTICULATION**
GELENKSYSTEM ZWISCHEN ZWEI STARREN ELEMENTEN UND BETRIEBSVERFAHREN HIERFUER
METHOD AND SYSTEM FOR HINGING TWO RIGID ELEMENTS

(30) Priorité: 13.11.1992 FR 9213681
(43) Date de publication de la demande: 03.01.1996
(73) Titulaire: Chene, Richard, F-92200 Neuilly-sur-Seine (FR); Delamour, Dominique, F-78490 Les Mesnuls (FR); Rodi, Olivier, F-78650 Saulx-Marchais (FR)
(72) Inventeur: Chene, Richard, F-92200 Neuilly-sur-Seine (FR); Delamour, Dominique, F-78490 Les Mesnuls (FR); Rodi, Olivier, F-78650 Saulx-Marchais (FR)
(74) Mandataire: Sauvage, Renée
(86) Numéro de dépôt international: FR9301092
(87) Numéro de publication internationale: WO9411606

(56) Documents cités:
- WO-A-92/15916
- DE-U- 8 804 928
- US-A- 1 834 609
- US-A- 2 117 148
- US-A- 3 549 246
- US-A- 4 690 468

## Description

La présente invention concerne un procédé d'articulation entre deux éléments rigides susceptibles d'occuper, par pivotement autour d'au moins un point, dit "point de pivotement", diverses positions angulaires, deux systèmes pour la mise en oeuvre de ce procédé, adaptés respectivement à une monture de lunettes et à une portière de véhicule, et les applications industrielles précitées.

Outre la réalisation de charnières de lunettes et de charnières de portières de véhicules, l'invention trouve également son application dans la réalisation de charnières de mobilier, d'articulations de prothèses ou d'éléments de robots industriels, sans que ces applications soient limitatives.

Plus précisément, le procédé selon l'invention concerne les articulations utilisant des moyens élastiques ayant deux extrémités opposées ancrées respectivement sur chacun desdits éléments rigides, de part et d'autre dudit point de pivotement, lequel est, selon l'invention, un point de pivotement immatériel, et il consiste à conférer auxdits éléments au moins une position angulaire stable, en créant, dans la courbe de la tension des moyens élastiques, en fonction de la position angulaire relative desdits éléments rigides, dite "Courbe de Tension", au moins une valeur minimale de tension où la pente de ladite Courbe de Tension s'inverse, ladite valeur minimale correspondant à une position angulaire dans laquelle les extrémités des moyens élastiques et le point de pivotement ne sont pas alignés et étant créée au voisinage immédiat d'une valeur maximale où la pente de ladite Courbe de Tension s'inverse, le pivotement permettant de passer de la valeur minimale de tension à la valeur maximale n'excédant pas un angle de 90°. Dans la pratique, cet angle peut être nettement inférieur à 90°, par exemple être de 60°, ou même seulement de 45°.

Il convient de préciser que, lorsque les éléments rigides pivotent autour de plusieurs points de pivotement, ces points de pivotement peuvent définir ensemble une surface de pivotement.

L'expression "de part et d'autre" utilisée ci-dessus et dans la suite du texte, y compris les revendications, est une formulation simple exprimant le fait que la perpendiculaire abaissée depuis le ou chacun desdits points de pivotement vers les moyens élastiques est toujours sécante auxdits moyens élastiques en un point compris entre les extrémités desdits moyens et distinct desdites extrémités. On comprend que, lorsqu'à une position angulaire correspond une valeur minimale de tension, les éléments rigides ont tendance à venir s'y positionner naturellement et qu'ensuite, du fait de l'inversion de la Courbe de Tension au niveau de cette position angulaire, les éléments rigides ont tendance à s'y maintenir, toute variation angulaire dans une direction ou l'autre entraînant une augmentation de tension des moyens élastiques et donc nécessitant un effort. Cette position angulaire est donc stable.

On connaît, certes, d'après US-A-2 117 148 Clark, une charnière à double action, pour porte battante, laquelle charnière incorpore un ressort dont la courbe de tension présente un minimum entre deux maxima. Plus précisément, dans le dispositif connu, à partir d'une valeur correspondant à la position "ouverture vers la droite" de la porte, la tension du ressort augmente, au fur et à mesure que la porte pivote, pour passer par une valeur maximale (ci-après t1) correspondant à l'alignement entre les points de fixation du ressort et l'un des deux axes de rotation, valeur maximale au-delà de laquelle la tension décroît pour atteindre une valeur minimale (ci-après t2) correspondant à la position de fermeture de la porte, après quoi la tension croît de nouveau jusqu'à une valeur maximale (ci-après t3) correspondant à l'alignement entre les points de fixation du ressort et le deuxième axe de rotation, pour ensuite décroître de nouveau jusqu'à une valeur correspondant à la position "ouverture vers la gauche" de la porte. Dans le cas de ce dispositif connu, qui confère à la porte une position d'équilibre correspondant à la situation où la pente de la courbe s'inverse, pour passer de t1 à t2 ou de t2 à t3, il faut que l'angle de rotation de la porte autour de son axe soit de 90°.

Cependant, dans ce dispositif connu, l'articulation ne se fait pas entre deux éléments rigides appuyés l'un sur l'autre mais entre deux éléments rigides dont l'un vient en prise avec l'un et/ou l'autre de deux axes de rotation solidaires de l'autre élément. Il s'ensuit qu'à la différence de l'invention, dans laquelle, comme indiqué plus haut, le ou les point(s) de pivotement sont immatériel(s), ce qui autorise un travail de l'articulation dans divers plans, le dispositif connu ne peut, lui, travailler que dans le plan perpendiculaire aux deux axes de rotation.

Le document WO 92/15916 Williams divulgue un système d'articulation de monture de lunettes constitué de deux éléments rigides reliés par un moyen élastique et articulés autour d'un point ou axe de pivotement immatériel. Dans ce système connu, cependant, si les deux éléments rigides peuvent occuper une position angulaire relative stable, correspondant à la position d'ouverture normale des branches, pour laquelle la courbe de la tension du moyen élastique en fonction de l'angle de pivotement présente un minimum où la pente de la courbe s'inverse, ladite courbe n'offre pas de pic correspondant à une position angulaire instable. La variation de la tension du moyen élastique est en effet obtenue par déformation de celui-ci et non par la variation de la position dudit moyen par rapport au point de pivotement.

Le procédé selon l'invention constitue donc à la fois un perfectionnement à celui divulgué dans US-A-2 117 148 et à celui objet de WO 92/15916.

Le procédé selon l'invention se distingue par ailleurs de ces deux documents par le fait qu'il consiste en outre à créer, au delà d'une position angulaire stable, une Courbe de Tension croissante à laquelle correspond une gamme de positions angulaires instables, en exerçant un effet de levier sur les moyens élastiques, soit sans contact physique avec lesdits moyens élastiques, par changement de point de pivotement, soit en amenant au contact desdits moyens élastiques une partie saillante de l'un des éléments rigides qui les contraint à un allongement au cours du pivotement.

Cette gamme de positions angulaires instables correspondra généralement à une ouverture outrepassée de l'articulation, l'instabilité aboutissant à un retour à une position d'ouverture normale dès que cesse l'effort ayant provoqué l'ouverture outrepassée.

Comme on l'a vu plus haut, le dispositif divulgué par US-A-2 117 148 offre une courbe de tension comportant deux valeurs maximales t1 et t3 où la pente de la courbe s'inverse, et ces pics se traduisent par une instabilité de position en position ouverte, ce qui est le propre des portes battantes. La porte est cependant stable en position ouverte extrême, vers la droite ou vers la gauche, grâce au fait que chacun des deux axes de la charnière étant constitué par deux portions d'axes en vis-à-vis séparées par un espace, le ressort peut franchir chaque axe par passage au travers dudit espace. Les deux éléments rigides du dispositif enseigné par le document WO 92/15916 peuvent occuper, en position d'ouverture outrepassée (c'est-à-dire lorsque l'angle entre les branches et la face de la monture est supérieur à 90°), différentes positions angulaires instables. Dans ce cas, cependant, l'augmentation de la tension du moyen élastique n'est pas due à un effet de levier mais au fait que ledit moyen élastique, qui a une configuration linéaire pour un angle de pivotement de 90°, tend à se déformer lorsque cet angle augmente.

Comme indiqué plus haut, l'invention concerne également deux systèmes pour la mise en oeuvre du procédé en cause, dont l'un est adapté à une monture de lunettes et l'autre à une portière de véhicule.

Plus précisément, ces systèmes sont du type comprenant deux éléments rigides susceptibles d'occuper, par pivotement autour d'au moins un point immatériel, dit "point de pivotement", diverses positions angulaires, et des moyens élastiques ayant deux extrémités opposées ancrées respectivement sur chacun desdits éléments rigides, de part et d'autre dudit point de pivotement, l'alignement d'une première desdites extrémités des moyens élastiques, dudit point de pivotement et de la deuxième desdites extrémités des moyens élastiques correspondant nécessairement à un pic dans la courbe de la tension des moyens élastiques en fonction de la position angulaire relative desdits éléments rigides, dite "Courbe de Tension", ledit système comportant des moyens adaptés à faire succéder audit pic une valeur minimale dans la Courbe de Tension, où la pente de la Courbe s'inverse, le pivotement permettant de passer dudit pic à ladite valeur minimale n'excédant pas un angle de 90°. L'augmentation de tension peut être créée en exerçant un effet de levier sur lesdits moyens élastiques, avec ou sans contact physique exercé sur lesdits moyens élastiques.

Dans une forme d'exécution particulière de l'invention appliquée à une monture de lunettes, les éléments rigides sont respectivement adaptés à être montés sur, ou dans, une branche et sur, ou dans, une face de monture de lunettes. En variante, l'un des deux éléments peut faire partie intégrante d'une branche de lunettes ou d'une face de monture de lunettes, ou encore les deux éléments peuvent faire partie intégrante, l'un, d'une branche de lunettes, l'autre, d'une face de monture.

La portée de l'invention s'étend bien entendu aux montures de lunettes incorporant le système selon l'invention, que le système soit rapporté à une branche et une face classique, qu'il soit incorporé dans une branche (ou une face) spécialement conçue et montée sur la face (ou la branche) associée, ou qu'il soit enfin intégré à une branche et une face spécialement conçue à cet effet.

Dans cette forme d'exécution, les éléments rigides sont adaptés à pivoter dans plusieurs plans et, dans le plan normal d'articulation, la pente minimale de la Courbe de Tension correspond à une position angulaire stable où la branche est en position d'ouverture normale et où les extrémités des moyens élastiques et le point de pivotement ne sont pas alignés. Une autre position angulaire stable, de tension minimale, des moyens élastiques pourra correspondre, pour un angle de pivotement sensiblement nul, à la position "branche fermée", ledit système offrant éventuellement une gamme de positions angulaires instables correspondant à des positions d'ouvertures outrepassées.

L'invention constitue alors un perfectionnement à WO 92/15916 qui ne divulgue pas de Courbe de Tension telle que celle revendiquée.

Dans une autre forme d'exécution particulière de l'invention, le système général précité est appliqué à une charnière de porte dans laquelle les éléments rigides sont respectivement adaptés à être montés sur, ou dans, une porte, notamment une portière de véhicule, et sur, ou dans, un dormant, notamment un dormant de caisse de véhicule.

Dans cette forme d'exécution, les éléments rigides sont susceptibles de pivoter autour d'une succession de points, dits "points de pivotement", chaque alignement des extrémités des moyens élastiques et d'un point de pivotement correspondant à un pic dans la Courbe de Tension.

Ce système se distingue de celui divulgué dans US-A-2 117 148, outre l'utilisation d'un point de pivotement immatériel, par le fait que deux au moins des pics sont situés au voisinage immédiat l'un de l'autre dans la Courbe, et en ce que ladite Courbe présente en outre deux valeurs minimales où la pente de la Courbe s'inverse, correspondant à une première et une deuxième positions angulaires stables, respectivement les positions "porte ouverte en position parking" et "porte grande ouverte", tandis qu'une autre position angulaire stable de tension minimale des moyens élastiques, pour un angle de pivotement sensiblement nul, correspond à la position "porte fermée", ledit système offrant éventuellement une gamme de positions angulaires instables correspondant à des positions d'amortissement d'ouverture outrepassée.

Dans une forme d'exécution particulière du système selon l'invention, un canal longitudinal est ménagé dans chacun desdits éléments rigides, l'axe longitudinal du canal étant parallèle à l'axe de l'élément rigide correspondant mais ne se confondant pas avec lui, et lesdits moyens élastiques prennent la forme d'un brin logé dans l'enfilade des deux canaux.

Les extrémités desdits éléments rigides, voisines dudit point de pivotement, revêtent respectivement des formes mâle et femelle.

La forme femelle définit une cavité réceptrice de la forme mâle et, de préférence, cette cavité débouche à l'extérieur de la forme femelle par une échancrure dans le plan de pivotement relatif des éléments, ladite forme mâle présentant, dans ce même plan, une saignée coïncidant avec ladite échancrure.

De préférence, ladite échancrure affecte ladite forme femelle sur un premier angle dans un sens de pivotement et sur un second angle dans un sens de pivotement opposé et, pour permettre le relâchement des moyens élastiques duquel résulte une deuxième position angulaire stable, ladite saignée n'affecte la forme mâle que sur ledit premier angle.

L'absence de saignée selon le second angle se traduit par la présence d'une partie d'élément mâle que les moyens élastiques ont à contourner pour permettre le pivotement dans le deuxième sens, avec déformation simultanément transversale et longitudinale, et cette partie d'élément mâle forme levier tendant à contrarier ce mode de pivotement, d'où l'instabilité des positions angulaires correspondantes.

On peut donner à la cavité de l'extrémité femelle et à l'extrémité mâle une autre configuration que sphérique, par exemple cylindrique, en particulier lorsque l'on désire que les éléments rigides pivotent respectivement dans un seul plan.

La cavité de l'extrémité femelle et l'extrémité mâle peuvent comporter des reliefs appariés qui, lorsqu'ils viennent en correspondance, forment cran d'arrêt.

Les moyens élastiques peuvent être en caoutchouc naturel ou synthétique, être constitués par un ressort ou par un brin en un matériau élastique, par exemple en copolymère de téréphtalate d'alkylène possédant des chaînes polyéther glycol, type de produit dont une variété est commercialisée sous la marque Hytrel.

En variante, les moyens élastiques peuvent comprendre un brin en un matériau souple non élastique, par exemple en fibres aramides, telles que celles commercialisées sous la marque Kevlar, et au moins une pièce élastique ayant une extrémité ancrée audit brin et l'autre extrémité ancrée à l'élément rigide.

En variante encore la tension élastique peut être créée par un vérin, un électro-aimant ou tout autre moyen approprié.

Le brin peut avantageusement former gaine pour le passage de conduits ou de liaisons, par exemple pour le passage de conducteurs électriques, de fibres optiques, de canaux de circulation de fluide. Cette structure sera particulièrement avantageuse dans certaines applications, la présence du brin souple pouvant être exploitée pour permettre le passage de moyens dont la mise en oeuvre est sans relation avec la fonction de l'articulation (par exemple de câbles électriques permettant la commande d'orientation d'un rétroviseur d'aile lorsque le brin appartient à une charnière de portière d'automobile) ou en relation directe avec la fonction d'articulation (par exemple de câbles électriques ou de conduits de fluide permettant de commander la position angulaire ou le verrouillage dans une position donnée des éléments articulés, en orthopédie, robotique, aéronautique, etc.)

Selon une autre application de l'invention, les deux éléments sont - ou sont adaptés à être montés respectivement dans - deux composants de prothèse d'articulation, une position angulaire stable correspondant à la position "articulation droite" tandis qu'une autre position angulaire stable de tension minimale des moyens élastiques pour un angle de pivotement sensiblement nul, correspond à la position "articulation pliée", ledit système offrant éventuellement une gamme de positions angulaires instables correspondant à des positions d'articulation "forcée".

Une application très similaire à celle indiquée ci-dessus est celle des articulations pour le mobilier.

L'invention est décrite ci-après avec davantage de détails par préférence aux dessins annexés dans lesquels:
- la figure 1 est un graphique montrant la tension des moyens élastiques en fonction de la position angulaire des éléments rigides, dans un premier mode de mise en oeuvre de l'invention, adapté par exemple à la réalisation d'une articulation pour monture de lunettes,
- la figure 2 est un graphique montrant la tension des moyens élastiques en fonction de la position angulaire des éléments rigides, dans un deuxième mode de mise en oeuvre de l'invention, adapté par exemple à la réalisation d'une charnière pour portière de voiture,
- les figures 3a-d montrent schématiquement une première forme de réalisation d'une articulation dont les moyens élastiques ont une Courbe de Tension telle que représentée à la figure 1,
- les figures 4a-e montrent schématiquement une deuxième forme de réalisation d'une articulation dont les moyens élastiques ont une Courbe de Tension telle que représentée à la figure 2,
- les figures 5 à 7 représentent, en coupe longitudinale et en détail, une forme d'exécution de l'articulation selon l'invention, appliquée à la réalisation d'une monture de lunettes, ladite articulation étant respectivement représentée en une première position angulaire stable, en une deuxième position angulaire stable et en une position angulaire maximale instable, et
- la figure 8 est une coupe longitudinale d'une variante d'exécution de l'articulation des figures 5 à 7.

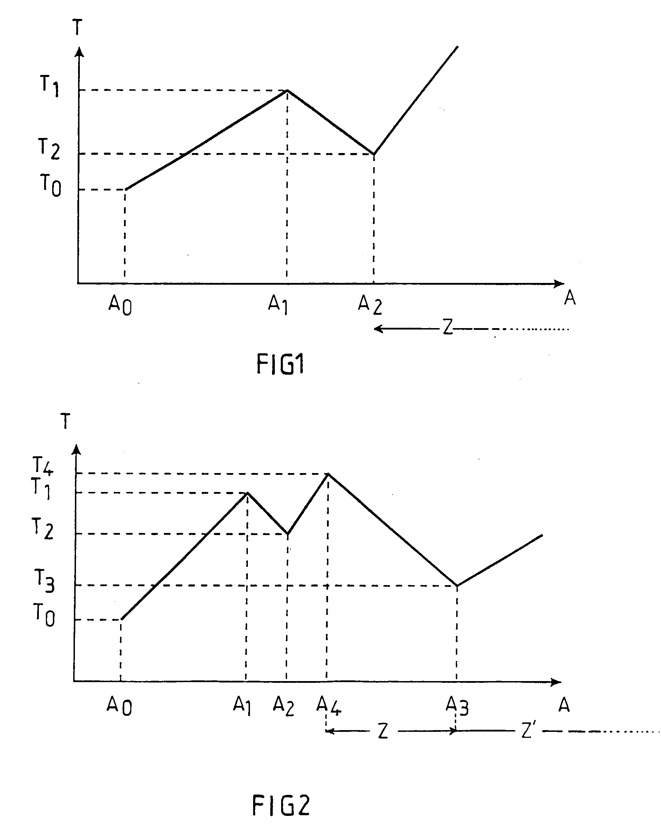

Si l'on examine la figure 1, on voit une Courbe de la Tension T des moyens élastiques selon l'invention en fonction de la position angulaire relative A des éléments rigides articulés. La tension qui est au départ de To pour l'angle Ao croît avec l'angle jusqu'à atteindre, pour un angle A1 une valeur maximale T1 au-delà de laquelle la pente de la courbe s'inverse pour atteindre une valeur minimale T2 (angle A2) au-delà de laquelle la pente s'inverse à nouveau, la tension ne cessant plus d'augmenter au fur et à mesure que l'angle augmente.

Si l'on rapporte cette courbe, par exemple, au comportement d'une charnière de lunettes réalisée selon l'invention le point Ao/To correspond à la position branche fermée, le point A1/T1 à la venue en alignement d'une première des deux extrémités des moyens élastiques, du point de pivotement et de la deuxième desdites extrémités des moyens élastiques (position d'équilibre précaire),- le point A2/T2 à la position d'ouverture stable de la branche, tous les points situés au-delà de ce point A2/T2 (zone Z de la courbe) correspondant à des positions d'ouverture outrepassée instables.

Comme indiqué plus haut, l'invention est applicable à la réalisation de prothèses d'articulations. On notera à cet égard qu'à l'heure actuelle, les prothèses d'articulation n'autorisent aucun pivotement en ouverture outrepassée ou forcée ce qui conduit à l'endommagement fréquent de telles prothèses, problème que résout l'invention.

On comprend que, d'une manière générale, les moyens élastiques de l'articulation cherchent à atteindre une position, ou à revenir dans une position, où leur tension est minimale. Ils auront donc tendance, lorsque l'angle relatif entre les deux éléments est supérieur à A1 à rejoindre la "cuvette" que forme la courbe au niveau A2/T2, d'où la stabilité de cette position. De même, lorsque l'angle relatif entre les deux éléments est inférieur à A1, les moyens élastiques tendront à ramener les éléments dans la position Ao/To.

La figure 2 illustre le même principe que ci-dessus, mais avec la création dans la Courbe de Tension des moyens élastiques de deux cuvettes A2/T2 et A3/T3.

Si l'on rapporte cette courbe, par exemple, au comportement d'une charnière de portière de véhicule réalisée selon l'invention, le point Ao/To correspond à la position portière fermée, le point A2/T2 à la position de faible ouverture, dite "parking", de la portière (position stable), le point A3/T3 à la position grande ouverte de la portière (position stable). La zone Z de la courbe comprise entre les points A4/T4 et A3/T3 correspond à une zone d'aide à l'ouverture de la portière. Tous les points situés au-delà du point A3/T3 (zone Z' de la courbe) correspondent à des positions d'ouverture outrepassée instables pouvant se produire, par exemple, sous l'effet d'un coup de vent venant frapper la portière ouverte. Au-delà de A3/T3, on a donc un effet d'amortissement de ce type d'effort indésirable.

Les variations dans la Courbe de Tension peuvent être créées à l'aide de différents moyens.

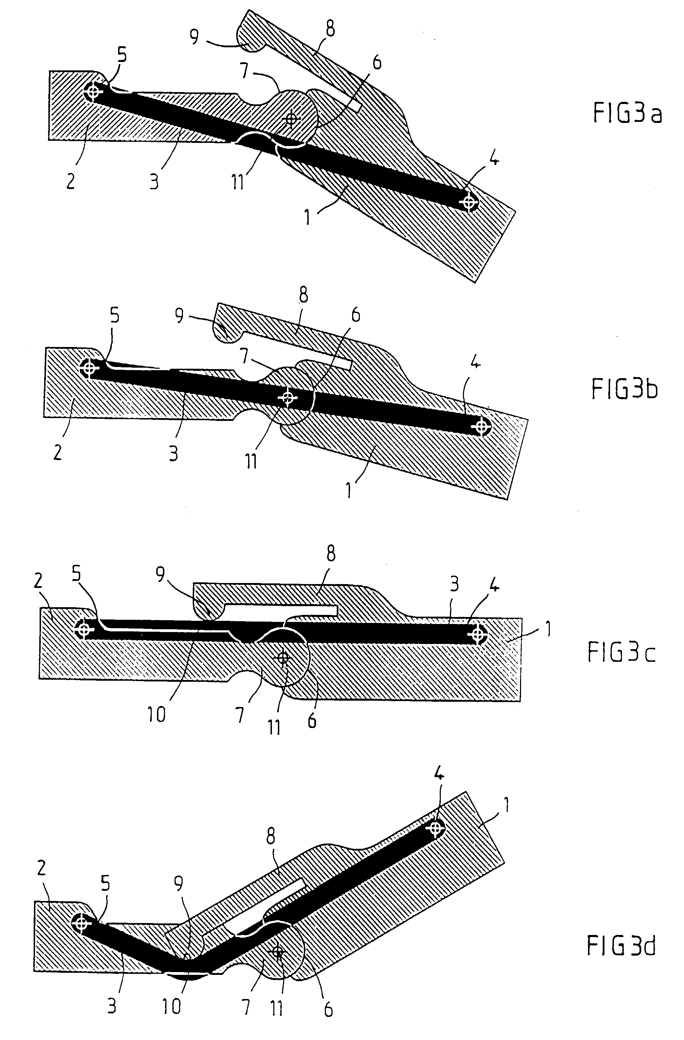

Une première possibilité est représentée aux figures 3a-d, où l'on a schématisé deux éléments rigides 1 et 2 en appui l'un sur l'autre et un brin élastique 3 dont les deux extrémités opposées 4 et 5 sont ancrées respectivement sur chacun desdits éléments, de part et d'autre de leur zone d'appui mutuel. L'élément 1 présente une terminaison femelle 6 en portion de sphère et l'élément 2 une terminaison mâle appropriée 7 en grande partie sphérique. L'élément 1 comporte en outre une projection 8 se terminant par un doigt 9 adapté à venir s'appuyer en 10 (figures 3c et 3d) sur le brin 3.

A la figure 3a le brin 3 a une tension minimale (point Ao/To de la figure 1, position angulaire stable). A la figure 3b, les extrémités 4 et 5 du brin 3 et l'axe de rotation 11 commun aux terminaisons 6 et 7, qui constitue ce que l'on a appelé plus haut un "point de pivotement", sont alignés, position qui correspond à un maximum dans la tension du brin 3 (point A1/T1 de la figure 1, équilibre précaire). On comprend que l'axe de rotation 11 est immatériel. A la figure 3c, le brin 3 passe entre le point 10 et l'axe de rotation ou point de pivotement 11, position qui correspond à un minimum dans la tension du brin 3 (point A2/T2 de la figure 1, position angulaire stable). Enfin, à la figure 3d, le doigt 9 fait levier en 10 sur le brin 3 dont il accroît la tension (position angulaire extrême instable correspondant à la zone Z de la courbe de la figure 1).

Il ressort clairement des figures 3b et 3c que le passage du point A1/T1 au point A2/T2 se fait par pivotement sur un angle inférieur à 90° (A2-A1<90°).

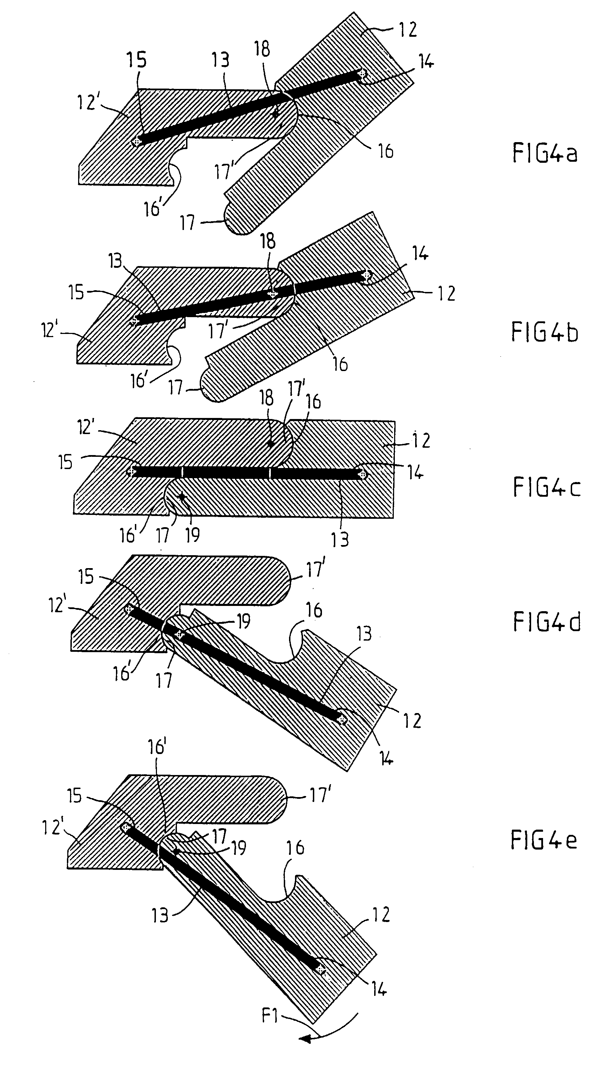

Une autre structure d'articulation selon l'invention est schématisée aux figures 4a à 4e. Elle comporte, comme la précédente, deux éléments rigides 12 et 12' en appui l'un sur l'autre et un brin élastique 13 dont les extrémités opposées 14 et 15 sont ancrées respectivement sur les éléments 12 et 12' de part et d'autre de leur zone d'appui mutuel. Chaque élément rigide 12 et 12' comporte une partie femelle, respectivement 16 et 16', et une partie mâle, respectivement 17 et 17', appariées et susceptible de venir respectivement en prise mutuelle. Les parties femelles 16 et 16' et les parties mâles 17 et 17' sont en portion de sphère, le rayon de courbure des parties appariées 16, 17' étant plus grand que celui des parties appariées 16' et 17. Lorsque les parties 16 et 17' sont en prise, elles ont un axe de rotation commun immatériel 18. De même les parties 16' et 17 en prise ont un axe de rotation commun immatériel 19. Ces axes de rotation 18 et 19 correspondent à ce que l'on a appelé plus haut "point de pivotement".

A la figure 4a, seules les parties femelle 16 et mâle 17' sont en prise et le brin élastique 13 a une tension minimale (point Ao/To de la figure 2, position angulaire stable). A la figure 4b, les parties 16 et 17' sont toujours en prise mais les extrémités 14 et 15 du brin élastique 13 et l'axe de rotation 18 sont alignés, position qui correspond à un premier maximum de tension du brin 13 (point A1/T1 de la figure 2; équilibre précaire). A la figure 4c les parties femelle et mâle 16, 17' et 16', 17 sont simultanément en prise et le brin 13 passe entre l'axe de rotation 18 et l'axe de rotation 19, position qui correspond à un premier minimum de tension (point A2/T2 de la figure 2; équilibre stable). A la figure 4d seules les parties femelle 16' et mâle 17 sont en prise. Les extrémités 14 et 15 du brin élastique 13 et l'axe de rotation 19 sont alignés, position qui correspond à un second maximum de tension (point A4/T4 de la figure 2; équilibre instable). Enfin à la figure 4e, les parties 16' et 17 sont toujours en prise mais le brin élastique 13 est passé au dessous de l'axe 19 avec un relâchement de la tension (point A3/T3 de la figure 2; position angulaire stable). Si l'élément 12 continue de pivoter par rapport à l'élément 12' dans le sens de la flèche F1, la tension du brin 13 réaugmente comme le montre la courbe de la figure 2, au delà du point A3/T3 (gamme de positions angulaires instables).

Là encore, on peut observer que le passage du point A1/T1 (figure 4b) au point A2/T2 (figure 4c), ou du point A2/T2 au point A4/T4 (figure 4d), ou du point A4/T4 au point A3/T3 (figure 4e), se fait par pivotement sur un angle inférieur à 90°.

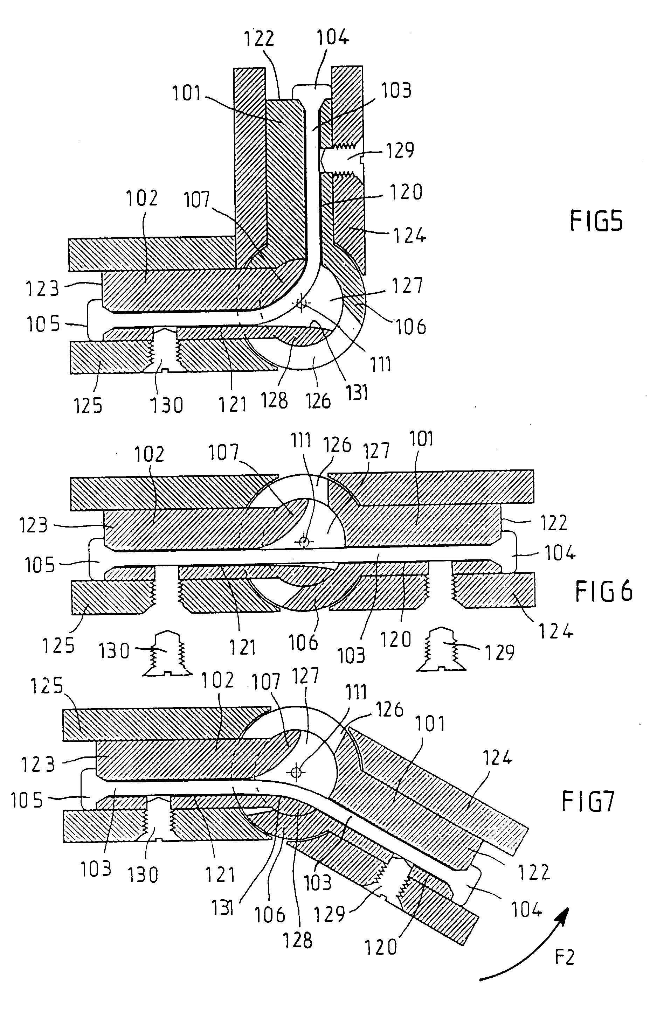

Le détail d'une structure d'articulation conforme à l'invention est représentée aux figures 5 à 7. Cette articulation, plus spécialement destinée à être intégrée dans une monture de lunettes, comprend deux éléments rigides 101 et 102 adaptés à pivoter autour d'un axe 111 qui est immatériel. Dans la suite, c'est par référence à cet axe que devront être comprises les notions de "proximale" et de "distale".

L'extrémité proximale 106 de l'élément 101 est en forme de sphère creuse, et sa cavité, sphérique également, est adaptée à recevoir l'extrémité proximale sphérique 107 de l'élément 102. Les extrémités proximales 106 et 107 sont donc respectivement femelle et mâle.

Dans chacun des deux éléments 101 et 102 est ménagé un canal, respectivement 120 et 121, lesquels canaux sont en communication l'un avec l'autre et adaptés à recevoir un brin 103 de matière élastomère. Les extrémités 104 et 105 du brin 103 sont élargies jusqu'à avoir une section supérieure à celle des canaux 120 et 121 de sorte que le brin 103 se trouve emprisonné dans l'ensemble par butée de ses extrémités élargies sur les extrémités distales 122 et 123 des éléments 101 et 102.

L'axe longitudinal des canaux 120 et 121 est respectivement parallèle à l'axe longitudinal des éléments 101 et 102 mais il ne se confond pas avec lui, de sorte que lorsque les éléments 101 et 102 sont alignés (Figure 6), le brin élastique 103, en configuration rectiligne, ne passe pas par l'axe de rotation 111.

Les éléments 101 et 102 sont respectivement logés dans des pièces tubulaires 124 et 125 qui sont immobilisées en place au moyen de vis pointeaux 129 et 130 représentées dévissées à la figure 6.

Les pièces 124 et 125 peuvent être des pièces autonomes auquel cas l'ensemble représenté revêt la forme d'une charnière qui sera rapportée sur chacune des parties d'un objet devant être articulées l'une par rapport à l'autre. En variante, l'une des pièces 124 et 125, ou les deux, peut ou peuvent faire partie intégrante desdites parties de l'objet en question, parties qui peuvent être par exemple une branche de lunettes et une face de monture de lunettes. Selon les applications, la pièce 124 et l'élément 101 pourraient n'être qu'une même pièce tout comme, de leur côté, la pièce 125 et l'élément 102 pourraient n'être qu'un.

La forme sphérique femelle 106 présente une échancrure 126 dans le plan de pivotement (plan de la feuille de dessin) affectant une fraction de sa périphérie, sur un "grand" angle - par exemple 85° - dans un sens et sur un "petit" angle - par exemple de 30° - dans le sens opposé.

La forme sphérique mâle 107 présente, quant à elle, une saignée 127 dans ce même plan, saignée qui coïncide avec l'échancrure 126 sur son grand angle seulement. Le petit angle de l'échancrure 126 coïncide avec une partie pleine 128 de la forme sphérique mâle.

Dans la configuration de la figure 5, qui correspond à la position branche fermée d'une monture de lunettes, le brin 103 a une tension minimale qui correspond au point Ao/To de la figure 1 (position angulaire stable). Si l'on fait pivoter l'ensemble 101, 124 par rapport à l'ensemble 102, 125, on provoque l'allongement du brin 103 avec pour résultat une augmentation de tension atteignant un maximum qui correspond au point A1/T1 de la figure 1 (équilibre instable). Au-delà de ce maximum ou pic, la tension décroît rapidement jusqu'à une valeur minimale (point A2/T2) lorsque les canaux 120 et 121 deviennent coaxiaux (figure 6) et que le brin 103 peut se relâcher. Cette position angulaire stable correspond à la configuration "branche ouverte".

Lorsque l'on ouvre les branches au-delà de leur position d'ouverture normale (figure 7), ce qu'un opticien peut préférer faire lorsqu'il place une monture sur le visage d'un client, ou ce que font les personnes qui "jouent" avec leurs lunettes, on accroît la tension du brin 103 en passant de la valeur T2 à des tensions supérieures : l'échancrure 126 permet le pivotement sur le petit angle qu'elle couvre, mais la partie 131 de l'extrémité proximale mâle 107 s'y oppose. Il s'ensuit que le brin 103 doit contourner cette partie 131. Ce faisant, non seulement il se courbe, mais il s'allonge pour atteindre un maximum de longueur. La tension à laquelle la partie 131 contraint le brin 103 rend instable toute position angulaire prise dans cette direction. Dès que l'effort exercé sur l'ensemble 101, 124 cesse, celui-ci pivote selon la flèche F2 et lorsque ce pivotement ramène l'état de tension minimal T2, un équilibre stable est atteint qui immobilise l'élément 101, 124 dans la position de la figure 6.

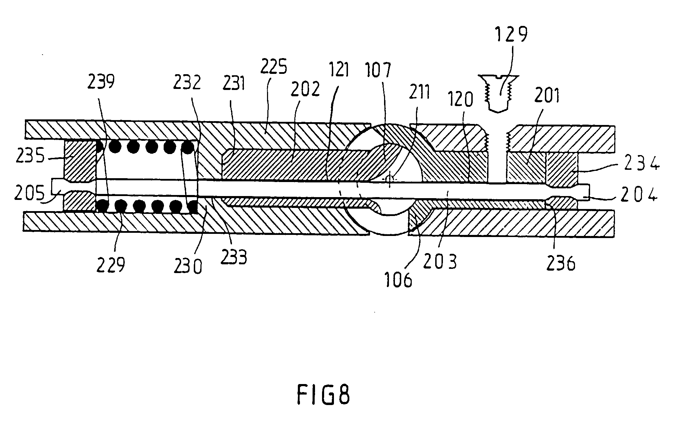

La forme d'exécution représentée à la figure 8 diffère de celles des figures 5 à 7 essentiellement par la composition des moyens élastiques utilisés.

Les moyens élastiques sont cette fois constitués par un ensemble formé d'un brin 203 souple, mais non élastique, et d'un ressort 229. Plus précisément, la pièce 225, qui est substituée à la pièce 125 des figures 5 à 7, présente une cloison intermédiaire 230 sur la face proximale de laquelle vient buter l'extrémité distale 231 de l'élément 202, qui correspond à l'élément 102 des figures 5 à 7, et sur la face distale de laquelle vient buter l'extrémité proximale 232 du ressort 229. La cloison 230 offre un passage 233 pour le brin 203 dont les extrémités 204 et 205 sont serties ou, autrement immobilisées, dans des pièces d'arrêt, respectivement 234 et 235, qui prennent appui, respectivement sur la face distale 236 de l'élément 201, qui correspond à l'élément 101 des figures 5 à 7, et sur l'extrémité distale 239 du ressort 229.

Les références apparaissant à la figure 8 qui sont identiques à des références des figures 5 à 7 désignent les mêmes pièces qu'il n'est pas nécessaire de décrire de nouveau.

La configuration de la figure 8 correspond à celle de la figure 6, le ressort 229 tendant à éloigner l'extrémité 205 du brin 203 de la cloison 230.

Dans la configuration de la forme d'exécution de la figure 8 qui correspondrait à la figure 5, le brin 203 se courbe sans changer de dimension, puisque par définition il n'est pas élastique. Comme il a à parcourir un chemin plus court que dans le cas de la figure 8, l'excès de longueur est absorbé par un surcroît de dilatation du ressort 229, éloignant l'extrémité distale 205 du brin 203 de l'axe de pivotement 211 qui correspond à l'axe 11 des figures 5 à 7, avec pour résultat un raccourcissement apparent du brin 203.

Dans la configuration de la forme d'exécution de la figure 8 qui correspondrait à la figure 7, le brin 203 se courbe dans l'autre sens, toujours sans changer de dimension. Il a cette fois à parcourir un chemin plus long que dans le cas de la figure 8. Ce besoin de longueur supplémentaire lui est fourni grâce à la compression du ressort 229, rapprochant l'extrémité distale 205 du brin 203 de l'axe de pivotement 211, avec pour résultat un allongement apparent du brin 203.

Bien que dans les explications données ci-dessus à propos des figures, on soit plus spécialement référé à l'application aux montures de lunettes, le principe de l'invention est, comme on l'a déjà indiqué, susceptible de nombreuses autres applications, notamment dans le domaine de l'orthopédie, de la robotique, de l'industrie automobile, etc.

Comme il ressort clairement de la description qui précède, les positions stables de l'articulation sont obtenues, selon l'invention, par la mise en appui de faces de contact sous l'effet de la tension de moyens élastiques, grâce à quoi, comme cela a déjà été dit, il est possible de supprimer l'axe de rotation matériel qui, d'ordinaire, prend la forme d'une goupille, d'une vis, d'un axe en une partie ou en plusieurs parties (comme dans le cas de la charnière Clark), ou encore d'autres formes. L'absence d'axe matériel permet aux éléments rigides de pivoter l'un sur l'autre, non seulement dans un plan, mais aussi dans l'espace, ce pivotement pouvant être limité par l'emploi de butées mécaniques sur les éléments rigides ou sur les moyens élastiques.

La suppression de l'axe de rotation dans les articulations conçues selon l'invention permet, en outre, si on le désire, un certain déboîtage de l'articulation. Par ailleurs, on élimine les jeux dus aux tolérances de fabrication et à l'usure grâce au rappel fourni par les moyens élastiques.

## Revendications

1. Système comprenant deux éléments rigides (1, 2 ; 101, 102 ; 201, 202) adaptés à être montés respectivement sur, ou dans, une branche de lunettes et sur, ou dans, une face de monture de lunettes, susceptibles **de pivoter l'un sur l'autre dans plusieurs plans et** d'occuper, par pivotement autour d'au moins un point immatériel (11 ; 111 ; 211), dit "point de pivotement", diverses positions angulaires, et des moyens élastiques (3 ; 103 ; 203, 229) ayant deux extrémités opposées (4, 5 ; 104, 105 ; 204, 205) ancrées respectivement sur chacun desdits éléments rigides, de part et d'autre dudit point de pivotement, caractérisé en ce que, **dans le plan normal d'articulation**, l'alignement d'une première (4 ; 104 ; 204) desdites extrémités des moyens élastiques (3 ; 103 ; 203, 229), dudit point de pivotement (11 ; 111 ; 211) et de la deuxième (5 ; 105 ; 205) desdites extrémités des moyens élastiques correspond nécessairement à un pic dans la courbe de la tension des moyens élastiques en fonction de la position angulaire relative desdits éléments rigides, dite "Courbe de Tension", et en ce que des moyens (120, 121, 127, 107, 131) sont adaptés à faire succéder audit pic une valeur minimale dans la Courbe de Tension, où la pente de la Courbe s'inverse, laquelle valeur minimale correspond à une position angulaire (A2/T2) stable où la branche est en position d'ouverture normale et où la première (4 ; 104 ; 204) desdites extrémités des moyens élastiques (3 ; 103 ; 203, 229), ledit point de pivotement (11 ; 111 ; 211) et la deuxième (5 ; 105 ; 205) desdites extrémités des moyens élastiques ne sont pas alignés, le pivotement permettant de passer dudit pic à ladite valeur minimale n'excédant pas un angle de 90°.

2. Système selon la revendication 1, caractérisé en ce que lesdits éléments rigides (1, 2 ; 101, 102 ; 201, 202) sont susceptibles d'occuper une autre position angulaire stable, de tension minimale (To) des moyens élastiques, pour un angle de pivotement (Ao) sensiblement nul, correspondant à une position stable "branche fermée" et en ce que ledit système offre éventuellement une gamme de positions angulaires (A>A2) instables correspondant à des positions d'ouverture outrepassée de la branche.

3. Système selon la revendication 1 ou 2, caractérisé en ce qu'un canal longitudinal (120, 121) est ménagé dans chacun desdits éléments rigides (101, 102 ; 201,202), l'axe longitudinal du canal (120,121) étant parallèle à l'axe de l'élément rigide correspondant (101,102 ; 201,202) mais ne se confondant pas avec lui, et en ce que lesdits moyens élastiques utilisent un brin (103, 203) logé dans l'enfilade des deux canaux (120, 121).

4. Système selon la revendication 3, caractérisé en ce que les extrémités (106, 107) desdits éléments (101, 102 ; 201, 202) voisines dudit point de pivotement (111 ; 211) revêtent respectivement des formes femelle (106) et mâle (107) comportant des reliefs appariés qui, lorsqu'ils viennent en correspondance, forment cran d'arrêt.

5. Système selon la revendication 4, caractérisé en ce que les extrémités (106, 107) desdits éléments (101, 102 ; 201, 202) voisines dudit point de pivotement (111 ; 211) revêtent respectivement des formes femelle (106) et mâle (107) et en ce que la forme femelle (106) définit une cavité réceptrice de la forme mâle (107), laquelle cavité débouche à l'extérieur de la forme femelle (106) par une échancrure (126) dans le plan de pivotement relatif des éléments (101, 102 ; 201, 202) et en ce que ladite forme mâle (107) présente, dans ce même plan, une saignée (127) coïncidant avec ladite échancrure (126).

6. Système selon la revendication 5, caractérisé en ce que ladite échancrure (126) affecte ladite forme femelle (106) sur un premier angle dans un sens de pivotement et sur un second angle dans un sens de pivotement opposé et en ce que ladite saignée (127) n'affecte la forme mâle (107) que sur ledit premier angle.

7. Système selon l'une quelconque des revendications 1 à 6, caractérisé en ce que les moyens élastiques comprennent un brin (203) en un matériau souple non élastique associé à au moins une pièce élastique (229).

8. Système selon l'une quelconque des revendications 2 à 7, caractérisé en ce que l'un des deux éléments (101, 102 ; 201, 202) fait partie intégrante d'une branche de lunettes ou d'une face de monture de lunettes.

9. Monture de lunettes incorporant le système selon l'une quelconque des revendications 2 à 8.

10. Système comprenant deux éléments rigides (12, 12') adaptés à être montés respectivement sur, ou dans, une porte, notamment une portière de véhicule, et sur, ou dans, un dormant, notamment un dormant de caisse de véhicule, et susceptibles d'occuper, par pivotement autour d'une succession de points (18, 19), dits "points de pivotement", diverses positions angulaires, et des moyens élastiques (13) ayant deux extrémités opposées (14, 15) ancrées respectivement sur chacun desdits éléments rigides, de part et d'autre dudit point de pivotement, l'alignement d'une première (14) desdites extrémités des moyens élastiques (13), de chacun desdits points de pivotement (18, 19) et de la deuxième (15) desdites extrémités des moyens élastiques correspondant nécessairement à un pic dans la courbe de la tension des moyens élastiques en fonction de la position angulaire relative desdits éléments rigides, dite "Courbe de Tension", des moyens (16, 17' ; 16', 17) étant adaptés à faire succéder audit pic une valeur minimale dans la Courbe de Tension, où la pente de la Courbe s'inverse, le pivotement permettant de passer dudit pic à ladite valeur minimale n'excédant pas un angle de 90°, caractérisé en ce que :
ledit point de pivotement est immatériel,
deux au moins desdits pics sont situés au voisinage immédiat l'un de l'autre, et
ladite Courbe présente en outre deux valeurs minimales où la pente de la Courbe s'inverse, correspondant à une première (A2/T2) et une deuxième (A3/T3) positions angulaires stables, respectivement les positions "porte ouverte en position parking" et "porte grande ouverte", tandis qu'une autre position angulaire stable de tension minimale (To) des moyens élastiques, pour un angle de pivotement (Ao) sensiblement nul, correspond à la position "porte fermée", ledit système offrant éventuellement une gamme de positions angulaires instables (A>A3) correspondant à des positions d'amortissement d'ouverture outrepassée.

11. Système selon l'une quelconque des revendications 1 à 8 ou 10, caractérisé en ce que les moyens élastiques sont constitués d'un brin (3 ; 13 ; 103) en un matériau élastique.

12. Système selon la revendication 11, caractérisé en ce que le brin forme gaine pour le passage de conduits ou de liaisons.

13. Charnière pour porte, notamment pour portière de véhicule, incorporant le système selon la revendication 10.

14. Procédé d'articulation entre deux éléments rigides (1,2; 12,12'; 101,102 ; 201,202) d'un système selon l'une quelconque des revendications 1 à 8 ou 10 à 12, susceptibles d'occuper, par pivotement autour d'au moins un point (11; 18,19; 111; 211), dit "point de pivotement", diverses positions angulaires, en utilisant des moyens élastiques (3; 13; 103; 203,229) ayant deux extrémités opposées (4,5; 14,15; 104,105; 204,205) ancrées respectivement sur chacun desdits éléments rigides, de part et d'autre dudit point de pivotement, et consistant à conférer auxdits éléments au moins une position angulaire stable, en créant, dans la courbe de la tension des moyens élastiques (3; 13; 103; 203,229) en fonction de la position angulaire relative desdits éléments rigides, dite "Courbe de Tension", au moins une valeur minimale de tension (A2/T2 ; A3/T3) où la pente de la courbe s'inverse, ladite valeur minimale correspondant à une position angulaire dans laquelle les extrémités des moyens élastiques (3; 13; 103; 203,229) et le point de pivotement (11; 18,19; 111; 211) ne sont pas alignés et étant créée au voisinage immédiat d'une valeur maximale (A1/T1 ; A4/T4) où la pente de la courbe s'inverse, le pivotement permettant de passer de la valeur minimale de tension à la valeur maximale n'excédant pas un angle de 90°, caractérisé en ce que ledit point de pivotement (11; 18,19; 111; 211) est immatériel et en ce que ledit procédé consiste en outre à provoquer, au-delà de l'une desdites positions angulaires stables (A2/T2 ; A3/T3), l'apparition d'une gamme de tensions croissantes à laquelle correspond une gamme de positions angulaires instables en exerçant un effet de levier sur lesdits moyens élastiques (3 ; 13 ; 103 ; 203, 229) soit sans contact physique avec lesdits moyens élastiques (13), par changement de point de pivotement (18, 19), soit en amenant au contact desdits moyens élastiques (3 ; 103 ; 203, 229) une partie saillante (9, 131) de l'un des éléments rigides (1, 102) qui les contraint à un allongement au cours du pivotement.

## Patentansprüche

1. System, bestehend aus zwei starren Elementen (1, 2; 101, 102; 201, 202), die dafür ausgelegt sind, auf oder in einem Brillenbügel bzw. auf oder in einer Brillenfassungsseite montiert zu werden, zueinander in mehreren Ebenen verschwenkbar sind und durch Verschwenken um mindestens einen gedachten Punkt (11; 111; 211), ,,Schwenkpunkt" genannt, verschiedene Winkelstellungen einnehmen können, und aus elastischen Mitteln (3; 103; 203; 229) mit zwei entgegengesetzten Enden (4, 5; 104, 105; 204, 205), die jeweils auf einem der starren Elemente zu beiden Seiten des Schwenkpunkts verankert sind, dadurch gekennzeichnet, daß das Fluchten eines ersten Endes (4; 104; 204) der elastischen Mittel (3; 103; 203; 229), des Schwenkpunkts (11, 111; 211) und des zweiten Endes (5; 105; 205) der elastischen Mittel in der normalen Gelenkebene notwendigerweise einer Spitze in der Kurve der Spannung der elastischen Mittel in Abhängigkeit von der relativen Winkelstellung, ,,Spannungskurve" genannt, entspricht, und daß Mittel (120, 121, 127, 107, 131) dafür ausgelegt sind, auf diese Spitze in der Spannungskurve einen Minimumwert folgen zu lassen, bei dem die Neigung der Kurve sich umkehrt und der einer stabilen Winkelstellung (A2/T2) entspricht, in der der Bügel in normaler Öffnungsstellung ist und in der das erste Ende (4; 104; 204) der elastischen Mittel (3; 103; 203; 229), der Schwenkpunkt (11; 111; 211) und das zweite Ende (5; 105; 205) der elastischen Mittel nicht in Flucht sind, wobei die den Übergang von dieser Spitze zum Minimumwert gestattende Verschwenkung einen Winkel von 90° nicht überschreitet.

2. System nach Anspruch 1, dadurch gekennzeichnet, daß die starren Elemente (1, 2; 101, 102; 201, 202) eine andere stabile Winkelstellung mit einer Minimumspannung (To) der elastischen Mittel bei einem Schwenkwinkel (Ao) von im wesentlichen null einnehmen könen, die einer stabilen Stellung ,,Bügel geschlossen" entspricht, und daß das System ggf. einen Bereich von unstabilen Winkelstellungen (A>A2) bietet, die Stellungen überschrittener Öffnung des Bügels entsprechen.

3. System nach Anspruch 1 oder 2, dadurch gekennzeichnet, daß in jedem der starren Elemente (101, 102; 201, 202) ein Längskanal (120, 121) vorgesehen ist, dessen Längsachse zur Achse des entsprechenden starren Elements (101, 102; 201, 202) parallel ist, jedoch mit dieser nicht zusammenfällt, und daß die elastischen Mittel einen Strang (103, 203) benutzen, der in die Folge der beiden Kanäle (120, 121) eingeführt ist.

4. System nach Anspruch 3, dadurch gekennzeichnet, daß die dem Schwenkpunkt (111; 211) benachbarten Enden (106, 107) der Elemente (101, 102; 201, 202) eine konkave Form (106) bzw. eine konvexe Form (107) aufweisen und zusammenpassende Reliefs besitzen, die eine Sperrstufe bilden, wenn sie in Übereinstimmung gelangen.

5. System nach Anspruch 4, dadurch gekennzeichnet, daß die dem Schwenkpunkt (111; 211) benachbarten Enden (106, 107) der Elemente (101, 102; 201, 202) eine konkave Form (106) bzw. eine konvexe Form (107) aufweisen und daß die konkave Form (106) einen Hohlraum zur Aufnahme der konvexen Form (107) bildet, der über einen Ausschnitt (126) in der Ebene der Relativverschwenkung der Elemente (101, 102; 201, 202) aus der konkaven Form (106) herausmündet, und daß die konvexe Form (107) in derselben Ebene einen Einschnitt (127) aufweist, der mit dem Ausschnitt (126) zusammenfällt.

6. System nach Anspruch 5, dadurch gekennzeichnet, daß sich der Ausschnitt (126) auf der konkaven Form (106) über einen ersten Winkel in einer Schwenkrichtung und über einen zweiten Winkel in einer entgegengesetzten Schwenkrichtung erstreckt und daß sich der Einschnitt (127) auf der konvexen Form (107) nur über den ersten Winkel erstreckt.

7. System nach einem der Ansprüche 1 bis 6, dadurch gekennzeichnet, daß die elastischen Mittel einen Strang (203) aus einem flexiblen, nicht elastischen Werkstoff aufweisen, dem mindestens ein elastisches Teil (229) zugeordnet ist.

8. System nach einem der Ansprüche 2 bis 7, dadurch gekennzeichnet, daß eines der beiden Elemente (101, 102; 201, 202) einen integrierenden Bestandteil eines Brillenbügels oder einer Brillenfassungsseite bildet.

9. Brillenfassung, in die das System nach einem der Ansprüche 2 bis 8 eingegliedert ist.

10. System, bestehend aus zwei starren Elementen (12, 12'), die dafür ausgelegt sind, auf oder in einer Tür, insbesondere einer Fahrzeugtür, bzw. auf oder in einem Türrahmen, insbesondere einem Türrahmen einer Fahrzeugkarosserie, montiert zu werden, und durch Verschwenken um eine Folge von Punkten (18, 19), ,,Schwenkpunkte" genannt, verschiedene Winkelstellungen einnehmen können, und aus elastischen Mitteln (13) mit zwei entgegengesetzten Enden (14, 15), die jeweils an einem der starren Elemente zu beiden Seiten des Schwenkpunkts verankert sind, wobei das Fluchten eines ersten Endes (14) der elastischen Mittel (13), jedes der Schwenkpunkte (18, 19) und des zweiten Endes (15) der elastischen Mittel notwendigerweise einer Spitze in der Kurve der Spannung der elastischen Mittel in Abhängigkeit von der relativen Winkelstellung der starren Elemente, "Spannungskurve" genannt, entspricht und Mittel (16, 17'; 16', 17) dafür ausgelegt sind, auf diese Spitze in der Spannungskurve einen Minimumwert folgen zu lassen, bei dem die Neigung der Kurve sich umkehrt, wobei die den Übergang von der Spitze zu diesem Minimumwert gestattende Verschwenkung einen Winkel von 90° nicht überschreitet, dadurch gekennzeichnet, daß der Schwenkpunkt gedacht ist, daß mindestens zwei Spitzen in unmittelbarer Nähe voneinander gelegen sind und daß die Kurve außerdem zwei Minimumwerte aufweist, bei denen die Neigung der Kurve sich umkehrt und die einer ersten stabilen Winkelstellung (A2/T2) und einer zweiten stabilen Winkelstellung (A3/T3) entsprechen, und zwar den Stellungen ,,Tür geöffnet in Parkstellung" bzw. ,,Tür ganz geöffnet", während eine andere stabile Winkelstellung mit einer Minimumspannung (To) der elastischen Mittel bei einem Schwenkwinkel (Ao) von im wesentlichen null der Stellung ,,Tür geschlossen" entspricht, wobei das System ggf. einen Bereich von unstabilen Winkelstellungen (A>A3) bietet, die Dämpfungsstellungen überschrittener Öffnung entsprechen.

11. System nach einem der Ansprüche 1 bis 8 oder 10, dadurch gekennzeichnet, daß die elastischen Mittel aus einem Strang (3; 13; 103) aus einem elastischen Werkstoff bestehen.

12. System nach Anspruch 11, dadurch gekennzeichnet, daß der Strang eine Hülle für den Durchgang von Leitungen oder Verbindungen bildet.

13. Türscharnier insbesondere für eine Fahrzeugtür, dem das System gemäß Anspruch 10 eingegliedert ist.

14. Verfahren zur Anlenkung von zwei starren Elementen (1, 2; 12, 12'; 101, 102; 201, 202) eines Systems nach einem der Ansprüche 1 bis 8 oder 10 bis 12, die durch Verschwenken um mindestens einen Punkt (11; 18, 19; 111; 211), "Schwenkpunkt" genannt, verschiedene Winkelstellungen einnehmen können, unter Verwendung von elastischen Mitteln (3; 13; 103; 203, 229) mit zwei entgegengesetzten Enden (4, 5; 14, 15; 104, 105; 204, 205), die jeweils an einem der starren Elemente zu beiden Seiten des Schwenkpunkts verankert sind, wobei dieses Verfahren darin besteht, daß den Elementen mindestens eine stabile Winkelstellung verliehen wird, indem in der Kurve der Spannung der elastischen Mittel (3; 13; 103; 203, 229) in Abhängigkeit von der relativen Winkelstellung der starren Elemente, ,,Spannungskurve" genannt, mindestens ein Minimumspannungswert (A2/T2; A3/T3) geschaffen wird, bei dem die Neigung der Kurve sich umkehrt, wobei dieser Minimumwert einer Winkelstellung entspricht, in der die Enden der elastischen Mittel (3; 13; 103; 203, 229) und der Schwenkpunkt (11; 18,19; 111; 211) nicht in Flucht sind, und in unmittelbarer Nähe eines Maximumwerts (A1/T1; A4/T4) erzeugt wird, bei dem die Neigung der Kurve sich umkehrt, wobei die den Übergang vom Minimumspannungswert zum Maximumwert gestattende Verschwenkung einen Winkel von 90° nicht überschreitet, dadurch gekennzeichnet, daß dieser Schwenkpunkt (11; 18,19; 111; 211) gedacht ist und daß das Verfahren außerdem darin besteht, daß jenseits einer der stabilen Winkelstellungen (A2/T2; A3/T3) das Auftreten eines Bereichs von zunehmenden Spannungen bewirkt wird, dem ein Bereich von unstabilen Winkelstellungen entspricht, indem auf die elastischen Mittel (3; 13; 103; 203, 229) eine Hebelwirkung ausgeübt wird, und zwar entweder ohne körperlichen Kontakt mit den elastischen Mitteln (13) durch Wechsel des Schwenkpunkts (18, 19) oder indem mit den elastischen Mitteln (3; 103; 203, 229) ein vorstehender Bereich (9, 131) eines der starren Elemente (1, 102) in Kontakt gebracht wird, der sie während des Verschwenkens zwingt, sich zu dehnen.

## Claims

1. System comprising two rigid elements (1, 2; 101, 102; 201, 202) which are designed to be mounted respectively on or in a side of a pair of spectacles and on or in a front of a spectacle frame, and which are capable of pivoting one on the other in several planes and of occupying, by pivoting about at least one non-physical point (11; 111; 211), known as the "pivot point", various angular positions, and elastic means (3; 103, 203, 229) having two opposite ends (4, 5; 104, 105; 204, 205) anchored respectively on each of the said rigid elements, one on each side of the said pivot point, characterized in that, in the normal plane of articulation, the alignment of a first (4; 104; 204) of the said ends of the elastic means (3; 103; 203, 229), of the said pivot point (11; 111; 211) and of the second (5; 105; 205) of the said ends of the elastic means necessarily corresponds to a peak in the curve of the tension in the elastic means as a function of the relative angular position of the said rigid elements, known as the "tension curve", and in that means (120, 121, 127, 107, 131) are designed so that the said peak in the tension curve is followed by a minimum value where the gradient of the curve changes sign, which minimum value corresponds to a stable angular position (A2/T2) in which the side is in the normal open position and in which the first (4; 104; 204) of the said ends of the elastic means (3; 103; 203, 229), the said pivot point (11; 111; 211) and the second (5; 105; 205) of the said ends of the elastic means are not aligned, the pivoting making it possible to pass from the said peak to the said minimum value not exceeding an angle of 90°.

2. System according to Claim 1, characterized in that the said rigid elements (1, 2; 101, 102; 201, 202) are capable of occupying another stable angular position of minimum tension (To) in the elastic means, for an appreciably zero angle of pivoting (Ao) corresponding to a stable "side closed" position and in that the said system possibly offers a range of unstable angular positions (A>A2) corresponding to positions of further opening of the side.

3. System according to Claim 1 or 2, characterized in that a longitudinal channel (120, 121) is formed in each of the said rigid elements (101, 102; 201, 202), the longitudinal axis of the channel (120, 121) being parallel to the axis of the corresponding rigid element (101, 102; 201, 202) but not coincident with it, and in that the said elastic means employ a strand (103, 203) housed in the succession of the two channels (120, 121).

4. System according to Claim 3, characterized in that the ends (106, 107) of the said elements (101, 102; 201, 202) close to the said pivot point (111; 211) respectively adopt female (106) and male (107) forms comprising mating reliefs which, when they come into register, form a stop catch.

5. System according to Claim 4, characterized in that the ends (106, 107) of the said elements (101, 102; 201, 202) near the said pivot point (111; 211) respectively adopt female (106) and male (107) forms and in that the female form (106) defines a cavity for accommodating the male form (107), which cavity opens to the outside of the female form (106) via a notch (126) in the plane of relative pivoting of the elements (101, 102; 201, 202) and in that the said male form (107) has, in this same plane, a cut (127) coinciding with the said notch (126).

6. System according to Claim 5, characterized in that the said notch (126) affects the said female form (106) over a first angle in one direction of pivoting and over a second angle in the opposite direction of pivoting, and in that the said cut (127) affects the male form (107) only over the said first angle.

7. System according to any one of Claims 1 to 6, characterized in that the elastic means comprise a strand (203) made of an inelastic flexible material associated with at least one elastic piece (229).

8. System according to any one of Claims 2 to 7, characterized in that one of the two elements (101, 102; 201, 202) forms an integral part of one side of a pair of spectacles or of the front of a spectacle frame.

9. Spectacle frame incorporating the system according to any one of Claims 2 to 8.

10. System comprising two rigid elements (12, 12') designed to be mounted respectively on or in a door, especially a vehicle door, and on or in a fixed frame, particularly the vehicle body frame, and capable of occupying, by pivoting about a succession of points (18, 19) known as "pivot points", various angular positions, and elastic means (13) having two opposite ends (14, 15) anchored respectively on each of the said rigid elements, one on each side of the said pivot point, the alignment of a first (14) of the said ends of the elastic means (13), of each of the said pivot points (18, 19) and of the second (15) of the said ends of the elastic means necessarily corresponding to a peak in the curve of the tension in the elastic means as a function of the relative angular position of the said rigid elements, known as the "tension curve", means (16, 17'; 16', 17) being designed so that the said peak in the tension curve is followed by a minimum value where the gradient of the curve changes sign, the pivoting for passing from the said peak to the said minimum value not exceeding an angle of 90°, characterized in that:
the said pivot point is non-physical,
at least two of the said peaks are located in immediate proximity to each other, and
the said curve also has two minimum values where the gradient of the curve changes sign, these corresponding to a first (A2/T2) and to a second (A3/T3) stable angular position, respectively the positions "door open in car park position" and "door wide open", while another stable angular position of minimum tension (To) in the elastic means, for an essentially zero angle of pivoting (Ao), corresponds to the "door closed" position, the said system possibly offering a range of unstable angular positions (A>A3) corresponding to excessively-open damping positions.

11. System according to any one of Claims 1 to 8 or 10, characterized in that the elastic means consist of a strand (3; 13; 103) made of an elastic material.

12. System according to Claim 11, characterized in that the strand forms a sheath for the passage of ducts or links.

13. Hinge for a door, especially for a vehicle door, incorporating the system according to Claim 10.

14. Method for articulating together two rigid elements (1, 2; 12, 12'; 101, 102; 201, 202) of a system according to any one of Claims 1 to 8 or 10 to 12, which are capable of occupying, by pivoting about at least one point (11; 18, 19; 111; 211), known as the "pivot point", various angular positions, using elastic means (3; 13; 103; 203, 229) have two opposite ends (4, 5; 14, 15; 104, 105; 204, 205) anchored respectively on each of the said rigid elements, one on each side of the said pivot point, and consisting in giving the said elements at least one stable angular position by creating, in the curve of the tension in the elastic means (3; 13; 103; 203, 229) as a function of the relative angular position of the said rigid elements, known as the "tension curve", at least one minimum tension value (A2/T2; A3/T3) where the gradient of the curve changes sign, the said minimum value corresponding to an angular position in which the ends of the elastic means (3; 13; 103; 203, 229) and the pivot point (11; 18, 19; 111; 211) are not aligned and being created in immediate proximity to a maximum value (A1/T1; A4/T4) where the gradient of the curve changes sign, the pivoting for passing from the minimum tension value to the maximum value not exceeding an angle of 90°, characterized in that the said pivot point (11; 18, 19; 111; 211) is non-physical and in that the said method further consists in causing there to be, beyond one of the said stable angular positions (A2/T2; A3/T3), a range of increasing tensions to which there corresponds a range of unstable angular positions exerting a lever arm effect on the said elastic means (3; 13; 103; 203, 229) either without physical contact with the said elastic means (13), by changing the pivot point (18, 19), or by bringing into contact with the said elastic means (3; 103; 203, 229) a projecting part (9, 131) of one of the rigid elements (1, 102) which forces them to lengthen during pivoting.
